(19) Europäisches Patentamt
European Patent Office
Office européen des brevets

(11) EP 1 094 097 A1

# (12) EUROPÄISCHE PATENTANMELDUNG

(43) Veröffentlichungstag:
**25.04.2001 Patentblatt 2001/17**

(51) Int. Cl.$^7$: **C09D 201/00**, B05D 1/36

(21) Anmeldenummer: **00122919.4**

(22) Anmeldetag: **20.10.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.10.1999 DE 19951068**

(71) Anmelder:
**BASF AKTIENGESELLSCHAFT**
**67056 Ludwigshafen (DE)**

(72) Erfinder:
- **Schwartz, Manfred, Dr.**
  **67227 Frankenthal (DE)**
- **Bechert, Bertold**
  **68269 Grünstadt (DE)**

(74) Vertreter:
**Kinzebach, Werner, Dr. et al**
**Patentanwälte**
**Reitstötter, Kinzebach und Partner**
**Postfach 86 06 49**
**81633 München (DE)**

## (54) Verwendung wässriger Polymerzubereitungen für Nass-in-Nass-Beschichtungen

(57) Gegenstand der vorliegenden Erfindung ist die Verwendung wässriger Polymerzubereitungen, enthaltend wenigstens ein filmbildendes Copolymer in Form einer wässrigen Polymerdispersion, worin das Copolymer, bezogen auf sein Gesamtgewicht, 0,1 bis 5 Gew.-% einer siliziumorganischen Verbindung chemisch gebunden enthält, als Erstauftrag bei der Herstellung von Nass-in-Nass-Beschichtungen, ein Verfahren zum Beschichten von Gegenständen sowie die durch das Verfahren erhältlichen beschichteten Gegenstände.

EP 1 094 097 A1

**Beschreibung**

Gegenstand der vorliegenden Erfindung ist die Verwendung wässriger Polymerzubereitungen auf Basis einer wässrigen Copolymerdispersion, die 0,1 bis 5 Gew.-% wenigstens einer siliziumorganischen Verbindung chemisch gebunden enthält, für Nass-in-Nass-Beschichtungen.

Die Herstellung mechanisch hochbelastbarer beschichteter Substrate erfolgt in vielen Fällen durch Mehrfachbeschichten nach dem Nass-in-Nass-Verfahren. Bei diesem insbesondere in der Lacktechnik verbreiteten Verfahren bringt man in einem ersten Arbeitsgang ein erstes Beschichtungsmittel auf ein Substrat auf. Auf diesen noch nassen Auftrag wird in einem zweiten Arbeitsgang ein weiteres Beschichtungsmittel aufgebracht und anschließend der Gesamtauftrag der zwei Arbeitsgänge physikalisch und/oder chemisch getrocknet bzw. gehärtet. Solche Nass-in-Nass-Beschichtungen werden insbesondere in der Automobilindustrie zur Lackierung von Blechen eingesetzt. Als Beschichtungsmittel werden in der Regel chemisch härtende Harzzubereitungen, z. B. Einbrennlacke, eingesetzt.

Wichtiges weiteres Einsatzgebiet für hochbelastbare Beschichtungen sind Baustoffe. Baustoffe, deren Oberflächen häufig mit veredelnden Beschichtungen versehen werden, sind z. B. mineralische Baustoffe, insbesondere solche auf Basis von Ton und Zement sowie Baustoffe aus Holz, Papier, Pappe und/oder Metall.

Von Interesse sind insbesondere flexible Baustoffe. Beispiele hierfür sind Dachpappen, z. B. Bitumenpappen und Bitumenwellpappen, Bauelemente aus Metall, z. B. Dachelemente aus Metall, Regenrinnen und Regenwasserableitungsrohre.

Die letztgenannten Baustoffe stellen besonders hohe Anforderungen an die Beschichtung, da die Baustoffe in der Regel sowohl bei der Herstellung als auch bei der Verwendung am Bau eine besondere mechanische Beanspruchung erfahren, z. B. durch Auf- oder Abwickeln und/oder beim Anpassen der vorgefertigten beschichteten Gegenstände an die örtlichen Gegebenheiten des Bauobjektes.

Im Stand der Technik werden für Bauelemente aus Metall Beschichtungsmittel auf Basis von Polyesterharzen beschrieben. Diese sind in der Regel teuer. Vielfach werden Bauelemente aus Metall mittels des Bandbeschichtungs- bzw. Coil-Coating-Verfahrens hergestellt. Als Substrate werden beim Coil-Coating entweder größere Metallbleche oder aufgewickelte Metallbänder eingesetzt. Das Coil-Coating stellt besonders hohe Anforderungen an die verwendete Beschichtung, da die Bauelemente nach dem Beschichten, z. B. durch Prägen, formgepresst und/oder wieder aufgewickelt werden. Bei dem Einsatz am Bau werden die so erhaltenen Bauelemente abgewickelt, zugeschnitten und/oder passend zurecht gebogen. Diese Form der Beanspruchung führt oft zu einer Ablösung der Beschichtung (Enthaftung) von der Oberfläche Bauelements, d. h. zu einem Abheben oder Abblättern der Beschichtung. Um einer Enthaftung vorzubeugen, werden in der Regel als Beschichtungsmittel aufwendig zu verarbeitende Harzzubereitungen eingesetzt, die nach dem Auftragen bei Temperaturen von 180 bis 260 °C eingebrannt werden müssen. Für besonders hochwertige Beschichtungen muss das Beschichten und Einbrennen zum Teil mehrfach wiederholt werden. Nachteilig an diesem Verfahren sind die für eine hinreichende Verfestigung erforderlichen hohen Einbrenntemperaturen und der in der Regel hohe Lösemittelgehalt der Beschichtungsmittel.

Zur Verbesserung der Oberflächeneigenschaften von mineralischen Substraten werden häufig Beschichtungsmittel auf Basis wässriger Polymerdispersionen eingesetzt. Hierbei haben sich solche Polymerdispersionen bewährt, die siliziumorganische Gruppen in chemisch gebundener Form aufweisen. So beschreibt die z. B. DE-C-21 48 57 die Verwendung wässriger Polymerdispersionen, die siliziumorganische Verbindungen einpolymerisiert enthalten, zur Beschichtung von Baumaterialien, wie z. B. Beton. Die resultierenden Beschichtungen weisen eine erhöhte Nasshaftung auf und quellen in Gegenwart von Wasser kaum. Die JP-A-61/9463 empfiehlt wässrige Polymerdispersionen, die ungesättigte siliziumorganische Verbindungen einpolymerisiert enthalten, als Bindemittel in Schutzüberzügen für anorganische Baumaterialien, wie Beton. Die DE-A-43 41 260 und die DE-A-195 37 935 empfehlen wässrige Polymerdispersionen, die siliziumorganische Verbindungen einpolymerisiert enthalten zum Verhindern von Ausblüherscheinungen auf mineralischen Substraten.

Aufgabe der vorliegenden Erfindung war es, Beschichtungsmittel für mechanisch hochbelastete Gegenstände, insbesondere hochbelastete flexible Gegenstände, auf Basis wässriger Bindemittelsysteme wie Polymerdispersionen bereitzustellen, die für die Nass-in-Nass-Beschichtung geeignet sind, keine hohen Einbrenntemperaturen benötigen und hochwertige Beschichtungen ergeben. Insbesondere sollen die Beschichtungen witterungsbeständig sein. So darf bei längerer Bewitterung keine Rissbildung und keine Verfärbungen der Beschichtungen auftreten. Auch sollen die beschichteten Gegenstände unter mechanischer Belastung, insbesondere bei Belastung durch Verformen, eine geringe Neigung zur Enthaftung der Beschichtung aufweisen.

Überraschend wurde nun gefunden, dass diese Aufgabe durch Nass-in-Nass-Beschichtungen gelöst wird, bei denen man ein Beschichtungsmittel auf Basis einer wässrigen Polymerdispersion, d. h. wässrige Polymerzubereitungen, die ein filmbildendes Copolymer enthalten, welches geringe Mengen siliziumorganische Verbindungen chemisch gebunden enthält, als Erstauftrag einsetzt.

Gegenstand der vorliegenden Erfindung ist daher die Verwendung wässriger Polymerzubereitungen, enthaltend wenigstens ein filmbildendes Copolymer in Form einer wässrigen Polymerdispersion, worin das Copolymer,

bezogen auf sein Gesamtgewicht, 0,1 bis 5 Gew.-% einer siliziumorganischen Verbindung chemisch gebunden enthält, als Erstauftrag bei der Herstellung von Nass-in-Nass-Beschichtungen.

Unter Nass-in-Nass-Beschichtungen versteht man Beschichtungen, bei denen eine erste Polymerzubereitung, auch Erstauftrag genannt, auf das zu beschichtende Substrat bzw. den zu beschichtenden Gegenstand aufgebracht wird und anschließend eine zweite Polymerzubereitung aufgebracht wird, bevor die erste Zubereitung ihre Endfestigkeit erreicht hat. Ein Maß für die Endfestigkeit ist der Wassergehalt der auf getragenen ersten Zubereitung. Vorzugsweise weist die auf den Gegenstand aufgebrachte erste Zubereitung zum Zeitpunkt des Aufbringens der zweiten Zubereitung einen Wassergehalt von wenigstens 5 Gew-%, bevorzugt wenigstens 10 Gew.-% und besonders bevorzugt wenigstens 15 Gew.-% auf, z. B. einen Wassergehalt im Bereich von 10 bis 60 Gew.-%, oder 15 bis 50 Gew.-%. Selbstverständlich kann die zweite Zubereitung auch direkt nach dem Aufbringen der ersten Zubereitung oder nach einem oder mehreren nach dem Aufbringen der ersten Zubereitung durchgeführten Trocknungsschritten aufgebracht werden. Bei den erfindungsgemäßen Nass-in-Nass-Beschichtungen kann man auch nach dem Auftragen der ersten Schicht und vor dem Auftrag der zweiten Schicht ein festes, nicht filmbildendes, teilchenförmiges Gut auf die noch feuchte erste Beschichtung aufbringen, z. B. ein Granulat oder einen Sand einstreuen, das dann durch die zweite Schicht gebunden wird. Grundsätzlich ist es auch möglich, als Erstbeschichtungsmittel eine Zubereitung auf Basis einer wässrigen Polymerdispersion einzusetzen, deren Polymer keine siliziumorganischen Gruppen aufweist. Diese zeigen allerdings eine verschlechterte Haftung auf der Substratoberfläche, insbesondere auf Metalloberflächen oder coil-coated Metalloberflächen, so dass es leichter zu einer Enthaftung der Beschichtung kommt. Auch ist die Wasseraufnahme bei Einsatz konventioneller Beschichtungsmittel auf Basis siliziumfreier Polymerdispersionen erhöht, was ebenfalls nicht erwünscht ist. Dieser Effekt ist weniger ausgeprägt, wenn man Erstbeschichtungsmittel auf Basis hydrophober wässriger Polymerdispersionen, z. B. Styrol/Butylacrylat-Polymerdispersionen, einsetzt. Eine optimale Performance erhält man, wenn erfindungsgemäße Beschichtungsmittel mit chemisch gebundenen Siliziumgruppen für die Erstbeschichtung eingesetzt werden.

Unter Polymerzubereitungen versteht man allgemein wässrige oder nichtwässrige Zubereitungen, die wenigstens ein filmbildendes Polymer enthalten, das beim Trocknen (d. h. beim Verfestigen) der Zubereitung mit den gegebenenfalls in der Zubereitung enthaltenen Füllstoffen und Pigmenten einen festen Film und damit eine Beschichtung ausbildet. Die in den erfindungsgemäß als Erstauftrag verwendeten Polymerzubereitungen enthaltenen filmbildenden Copolymeren enthalten üblicherweise 60 bis 99,8 Gew.-%, bevorzugt 70 bis 99 Gew.-% und besonders bevorzugt 80 bis 98 Gew.-%, wenigstens eines monoethylenisch ungesättigten, hydrophoben Monomeren einpolymerisiert. Unter hydrophoben Monomeren versteht man Monomere mit einer Wasserlöslichkeit < 60 g/l bei 25 °C. Derartige Monomere werden üblicherweise bei der Emulsionspolymerisation eingesetzt und sind dem Fachmann hinreichend bekannt. Vorzugsweise sind die hydrophoben Monomere (auch Hauptmonomere oder Monomere a) genannt) ausgewählt unter Monovinylaromaten, Estern $\alpha,\beta$-ethylenisch ungesättigter $C_3$-$C_6$-Monocarbonsäuren und Vinylestern von aliphatischen $C_2$-$C_{18}$-Carbonsäuren.

Geeignete Monovinylaromaten sind Styrol, $\alpha$-Methylstyrol, $\alpha$-Phenylstyrol, o-Chlorstyrol und Vinyltoluole. Geeignete Ester $\alpha,\beta$-ethylenisch ungesättigter $C_3$-$C_6$-Monocarbonsäuren sind beispieleweise die Ester der Acrylsäure und der Methacrylsäure mit $C_1$-$C_{12}$-, vorzugsweise $C_1$-$C_8$-Alkanolen, oder $C_5$-$C_{10}$-Cycloalkanolen, z. B. Methylacrylat, Methylmethacrylat, Ethylacrylat, Ethylmethacrylat, n-Butylacrylat, n-Butylmethacrylat, Isobutylacrylat, Isobutylmethacrylat, tert.-Butylacrylat, tert.-Butylmethacrylat, Hexylacrylat, Hexylmethacrylat, n-Octylacrylat, n-Octylmethacrylat, 2-Ethylhexylacrylat, 2-Ethylhexylmethacrylat, iso-Bornylacrylat, iso-Bornylmethacrylat, Norbornylacrylat, Norbornylmethacrylat, 4-tert.-Butylcyclohexylacrylat und 4-tert.-Butylcyclohexylmethacrylat. Geeignete Vinyl- und Allylester aliphatischer $C_2$-$C_{18}$-Carbonsäuren sind beispielsweise die Vinyl- oder Allylester der Essigsäure, Propionsäure, Buttersäure, Valeriansäure, Pivalinsäure, Hexansäure, Decansäure, Laurinsäure und Stearinsäure.

Geeignete Vinylester aliphatischer Monocarbonsäuren sind insbesondere Vinylacetat, Vinylpropionat, Vinylbutyrat, Vinylvalerat, Vinylpivalat, Vinylhexanoat, Vinyl-2-ethylhexanoat, Vinyldecanoat, Vinyllaurat, Vinylstearat sowie im Handel befindliche Monomere VEOVA® 5-11 (VEOVA® X ist ein Handelsname der Fa. Shell und steht für Vinylester von $\alpha$-verzweigten, aliphatischen Carbonsäuren mit X C-Atomen, die auch als Versatic® X-Säuren bezeichnet werden).

Besonders bevorzugt als Hauptmonomere (Monomere a)) sind monovinylaromatische Monomere, insbesondere Styrol, $\alpha$-Methylstyrol und o-Chlorstyrol, besonders bevorzugt Styrol, Ester der Acrylsäure mit $C_2$-$C_8$-Alkanolen, vorzugsweise Ethylacrylat, n-Butylacrylat und 2-Ethylhexylacrylat, besonders bevorzugt n-Butylacrylat, und Ester der Methacrylsäure mit $C_1$-$C_4$-Alkanolen, vorzugsweise Methylmethacrylat, Ethylmethacrylat, n-Butylmethacrylat, Isobutylmethacrylat und tert.-Butylmethacrylat, besonders bevorzugt Methylmethacrylat.

Bevorzugt werden filmbildende Copolymere verwendet, die als Monomere a) wenigstens ein Monomer a1, ausgewählt unter Styrol und Methylmethacrylat und wenigstens ein Monomer a2, ausgewählt unter n-Butylacrylat und 2-Ethylhexylacrylat umfassen.

Ganz besonders bevorzugt als Monomere a) sind daher die Monomerkombinationen Styrol/n-Butylacrylat; Styrol/n-Butylacrylat/2-Ethylhexylacrylat; Styrol/2-Ethylhexylacrylat; Methylmethacrylat/n-Butylacrylat; Methylmethacrylat/n-Butylacrylat/2-Ethylhexylmethacrylat; Methylmethacrylat/2-Ethylhexylacrylat; Styrol/Methylmethacrylat/n-Butylacrylat; Styrol/Methylmethacrylat/n-Butylacrylat/2-Ethylhexylacrylat.

Die Copolymere enthalten häufig neben den Monomeren a) 0,1 bis 10 Gew.-%, bevorzugt 0,2 bis 7,5 Gew.-% und besonders bevorzugt 0,5 bis 5 Gew.-% wenigstens eines Monomers b), ausgewählt unter $\alpha,\beta$-ethylenisch ungesättigten $C_3$-$C_6$-Mono- und $C_4$-$C_8$-Dicarbonsäuren, deren Salzen und Amiden. Geeignete $\alpha,\beta$-ethylenisch ungesättigte $C_3$-$C_6$-Monocarbonsäuren sind insbesondere Acrylsäure, Methacrylsäure, Crotonsäure, Vinylessigsäure, Acryloyloxyglycolsäure und Methacrylamidoglykolsäure. Geeignete $\alpha,\beta$-ethylenisch ungesättigte $C_4$-$C_8$-Dicarbonsäuren sind insbesondere Maleinsäure, Fumarsäure, Itaconsäure und Citraconsäure. Geeignete Monomere b) sind ferner die Amide der vorstehend genannten Mono- und Dicarbonsäuren, insbesondere Acrylamid und Methacrylamid.

Die Copolymere der als Erstauftrag verwendeten wässrigen Polymerzubereitung enthalten erfindungsgemäß 0,1 bis 5 Gew.-%, vorzugsweise 0,2 bis 2,5 Gew.-%, insbesondere 0,3 bis 1,5 Gew.-% und besonders bevorzugt 0,35 bis 1,0 Gew.-%, z. B. etwa 0,5 Gew.-%, bezogen auf das Gewicht des Copolymeren wenigstens einer siliziumorganischen Verbindung chemisch gebunden. Geeignete siliziumorganische Verbindungen sind zum einen monoethylenisch ungesättigte Monomere, die einen $SiR^1_3$-Rest enthalten. Die Reste $R^1$ sind unabhängig voneinander ausgewählt unter H, $R^2$, $OR^3$ und Cl, wobei $R^2$ für lineare oder verzweigte $C_1$-$C_6$-Alkylreste und $R^3$ für H oder lineare oder verzweigte $C_1$-$C_6$-Alkylreste (Alkyl) oder für $C_1$-$C_5$-Alkylcarbonylreste (Acyl) steht. Insbesondere steht $R^1$ für $OR^3$ oder Cl. Wenn $R^1$ für $OR^3$ steht, steht $R^3$ vorzugsweise für H, lineares oder verzweigtes $C_1$-$C_4$-Alkyl, wie z. B. Methyl, Ethyl, Propyl, sec.-Propyl, Isopropyl, n-Butyl, sec.-Butyl, Isobutyl oder tert.-Butyl. Besonders bevorzugt als $R^3$ ist H, Methyl und Ethyl. Besonders bevorzugt sind $SiR^1_3$-Reste, die wenigstens eine Alkoxysilangruppe aufweisen. Insbesondere geeignet sind solche siliziumorganischen Verbindungen, die einen $SiR^1_3$-Rest enthalten, der an eine monoethylenisch ungesättigte Struktureinheit gebunden ist. Geeignet als ethylenisch ungesättigte Struktureinheit der siliziumhaltigen Monomere sind insbesondere Vinyl- und Allylreste, alkylsubstituierte Vinyl- und Allylreste, wie z. B. Methallyl, und die Alkylester ethylenisch ungesättigter $C_3$-$C_8$-Mono- und Dicarbonsäuren, wie z. B. die Monoester der Acrylsäure und Methacrylsäure und die Mono- und Diester der Maleinsäure und Fumarsäure, mit $C_1$-$C_6$-Hydroxyalkylenen, wie z. B. Hydroxymethylen, Hydroxyethylen, Hydroxypropylen und Hydroxybutylen.

Vorzugsweise sind die siliziumorganischen Verbindungen ausgewählt unter Vinyl-, (Meth)allyl- und (Meth)acryloxyalkylsilanen, die wenigstens eine SiOH, SiO-Alkyl- und/oder SiO-Acyl-Gruppe aufweisen.

Geeignet als siliziumhaltige ethylenisch ungesättigte Monomere sind somit insbesondere Vinyltrialkoxysilane, z. B. Vinyltrimethoxysilan und Vinyltriethoxysilan, Alkylvinyldialkoxysilane, Vinyldialkoxysilanole, wie z. B. Vinyldimethoxysilanol und Vinyldiethoxysilanol, Allyltrialkoxysilane, z. B. Allyltriethoxysilan und Allyltripropoxysilan, oder Di(Meth)acryloxyalkyltrialkoxysilane, z. B. Acryloxyethyltrimethoxysilan, Acryloxypropyltrimethoxysilan, Methacryloxyethyltrimethoxysilan und Methacryloxypropyltrimethoxysilan. Besonders bevorzugt sind Methacryloxypropyltrimethoxysilan, insbesondere $\gamma$-Methacryloxypropyltrimethoxysilan.

Geeignet als siliziumorganische Verbindungen sind zum anderen einpolymerisierbare siliziumorganische Verbindungen, die keine ethylenisch ungesättigte Struktureinheit aufweisen. Geeignete solche einpolymerisierbare siliziumorganische Verbindungen sind insbesondere Mercaptosilane. Diese werden wie Molekulargewichtsregler vorzugsweise am Ende einer Polymerisationskette eingebaut. Sie enthalten wenigstens eine SH-Gruppe und einen $Si(R^1)_3$-Rest, z. B. einen $Si(OR^3)_3$-Rest, wie bereits oben definiert. Geeignete Mercaptosilane sind z. B. Mercaptoalkyltrialkoxysilane, wie z. B. Mercaptopropyltrimethoxysilan und Mercaptopropyltriethoxysilan.

Vorzugsweise enthält das filmbildende Copolymer

a) 85 bis 99,8 Gew.-% wenigstens eines ethylenisch ungesättigten Monomers, ausgewählt unter Monovinylaromaten, Estern $\alpha,\beta$-ethylenisch ungesättigter $C_3$-$C_6$-Monocarbonsäuren mit $C_1$-$C_{12}$-Alkanolen und Vinylestern aliphatischer $C_1$-$C_{18}$-Carbonsäuren,
b) 0,1 bis 10 Gew.-% wenigstens eines ethylenisch ungesättigten Monomers, ausgewählt unter $\alpha,\beta$-ethylenisch ungesättigten $C_3$-$C_6$-Mono- und $C_4$-$C_8$-Dicarbonsäuren, deren Salzen und Amiden und
c) 0,1 bis 5 Gew.-% wenigstens einer ethylenisch ungesättigten siliziumorganischen Verbindung einpolymerisiert.

Darüber hinaus können die Copolymere bis zu 10 Gew.-%, vorzugsweise bis zu 5 Gew.-% weitere Monomere einpolymerisiert enthalten, wie beispielsweise die Hydroxyalkylester der vorgenannten ethylenisch ungesättigten Mono- und Dicarbonsäuren, z. B. Hydroxyethylacrylat, Hydroxypropylacrylat, 4-Hydroxybutylacrylat, die entsprechenden Methacrylate, wasserlösliche N-Vinyllactame, z. B. N-Vinylpyrrolidon, und die Mono- oder Dinitrile der vorstehend genannten Mono- und Dicarbonsäuren, insbesondere Acrylnitril und Methacrylnitril.

In den Copolymeren der erfindungsgemäß verwendeten Zubereitungen sind die Mengen an einpolymerisierten Bausteinen, d. h. an Monomeren a), Monomeren b), siliziumorganischen Verbindungen c) und gegebenenfalls weiteren Monomeren, mit der Maßgabe auszuwählen, dass sich die Mengen in dem Copolymer zu 100 Gew.-% ergänzen.

Insbesondere sind solche wässrigen Zubereitungen bevorzugt, deren Copolymere wenigstens eine siliziumorganische Verbindung in den vorstehend angegebenen Mengenbereichen und als monoethylenisch ungesättigte Monomere 40 bis 79,9 Gew.-%, bevorzugt 45 bis 74,9 Gew.-% und besonders bevorzugt 50 bis 69,9 Gew.-% wenigstens eines Monomers a1 ausgewählt unter vinylaromatischen Monomeren, vorzugsweise Styrol, und den $C_1$-$C_4$-Alkylestern der Methacrylsäure, insbesondere Methylmethacrylat, und 20 bis 59,9 Gew.-%, bevorzugt 25 bis 54,9 Gew.-% und besonders bevorzugt 30 bis 49,9 Gew.-% wenigstens eines Monomers a2, ausgewählt unter den Acrylestern von linearen oder verzweigten $C_1$-$C_{10}$-Alkanolen, vorzugsweise Ethylacrylat, n-Butylacrylat und 2-Ethylhexylacrylat, und als Monomere b) 0,1 bis 5 Gew.-%, bevorzugt 0,5 bis 2,5 Gew.-%, wenigstens einer copolymerisierbaren Carbonsäure, ausgewählt unter Acrylsäure, Methacrylsäure und Itaconsäure, bevorzugt Acrylsäure, einpolymerisiert enthalten.

Ebenfalls bevorzugt sind wie vorstehend beschriebene Polymerzubereitungen, bei denen das Styrol teilweise durch Methylmethacrylat ersetzt ist. Weiterhin sind Polymerzubereitungen bevorzugt, die als Monomere a im Wesentlichen nur n-Butylmethacrylat enthalten und weniger als 10 Gew.-% andere Monomere a.

Die Glasübergangstemperatur der in den erfindungsgemäßen Zubereitungen enthaltenen Copolymere liegt in der Regel unterhalb 80 °C. In der Regel wird eine Glasübergangstemperatur von 0 °C nicht unterschritten. Je höher die Glasübergangstemperatur des Copolymeren ist, desto fester ist die Beschichtung. Gleichzeitig nimmt allerdings die Flexibilität der Beschichtung ab. In der Regel wird man daher für die Erstbeschichtung von flexiblen Gegenständen solche Polymerzubereitungen wählen, worin das Copolymer eine Glasübergangstemperatur unterhalb +60 °C und vorzugsweise unterhalb +50 °C aufweist. Besonders bevorzugt liegt die Glasübergangstemperatur im Bereich von +10 bis +40 °C. Um eine gleichmäßige Verfilmung der Copolymere mit einem $T_g$ > 30 °C zu gewährleisten, empfiehlt sich der Einsatz von permanenten oder temporären Filmbildehilfsmitteln in den erfindungsgemäßen Polymerzubereitungen und/oder das Vorwärmen des zu beschichtenden Gegenstands oder eine abschließende, nach Aufbringen des Zweitauftrags durchgeführte Trocknung oberhalb der Glasübergangstemperatur bzw. der Mindestfilmbildetemperatur des Polymeren. Durch die Anwesenheit von Siliziumgruppen im Polymeren ist auch bei polymeren Bindemitteln mit Glasübergangstemperaturen oberhalb 30 °C eine ausreichende Flexibilität gewährleistet.

Bei Polymerzubereitungen, die verschiedene Copolymerisate mit unterschiedlichen Glasübergangstemperaturen enthalten, ist es in der Regel vorteilhaft, wenn zumindest die Glasübergangstemperatur $T_g$ des Hauptbestandteils in einem der vorstehend angegebenen Bereiche liegt. Solche Zubereitungen sind z. B. durch Mischung zweier oder mehrerer unterschiedlicher Copolymerisate oder durch Polymerisationsverfahren zugänglich, die z. B. zu Stufenpolymerisaten, Polymerteilchen mit Kern-Schale-Aufbau oder sonstigen Copolymerisatteilchen mit nicht statistischer Zusammensetzung führen.

Unter der Glasübergangstemperatur $T_g$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Die Einstellung der Glasübergangstemperatur $T_g$ auf einen gewünschten Wert kann sowohl durch Auswahl der entsprechenden Monomere als auch der Mengenverhältnisse der eingesetzten Monomere in dem Copolymerisat oder den Copolymerisaten erfolgen.

In diesem Zusammenhang erweist es sich als hilfreich, die Glasübergangstemperatur $T_g$ des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17-18) gilt für die Glasübergangstemperatur von schwach vernetzten Mischpolymerisaten bei großen Molmassen in guter Näherung

$$\frac{1}{T_g} = \frac{X^1}{T_g^{\,1}} + \frac{X^2}{T_g^{\,2}} + \cdots\cdots \frac{X^n}{T_g^{\,n}}$$

wobei $X^1, X^2, ..., X^n$ die Massenbrüche der Monomeren 1, 2, ..., n und $T_g^1, T_g^2, ..., T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E. H. Immergut, Polymer Handbook 3rd ed, J. Wiley, New York 1989 bekannt.

Vorzugsweise liegt das in Wasser dispergierbare Copolymerisat als Polymerteilchen mit mittleren Teilchengrößen im Bereich von 50 bis 1000 nm, insbesondere 50 bis 500 nm, besonders bevorzugt 60 bis 250 nm, vor. Verfahren zur Einstellung der Polymerteilchengröße sind beispielsweise aus der EP-A-126 699, der EP-A-567 881, der EP-A-567 819, der DE-A-31 47 008 und der DE-A-42 13 967 bekannt.

Die zur Anwendung kommenden Copolymerisate sind bekannt, im Handel erhältlich oder können nach bekannten Methoden hergestellt werden.

Die Herstellung der Copolymerisate kann durch alle Arten der radikalischen Copolymerisation ethylenisch ungesättigter Monomere, z. B. durch Lösungs-, Fällungs-, Substanz-, Emulsions- oder Suspensionspolymerisation

erfolgen. Bevorzugt werden die Copolymerisate mittels radikalischer, wässriger Emulsionspolymerisation in Gegenwart wenigstens eines radikalischen Polymerisationsinitiators und gegebenenfalls einer oder mehrerer grenzflächenaktiver Substanzen, durchgeführt.

Die wässrige Emulsionspolymerisation kann in üblicher Weise erfolgen, z. B. wie beispielsweise in der "Encyclopedia of Polymer Science and Technology", Vol. 5, Wiley & Sons Inc., NY 1966, S. 847 beschrieben. Auch in Wasser dispergierbare Copolymerisate in Form mehrphasiger Teilchen sind brauchbar. Ihre Herstellung kann z. B. durch sequentielle Verfahren, wie z. B. in der EP-555 959, EP-308 753 und EP-654 454 beschrieben, erfolgen.

Die Polymerisation wird in üblicher Weise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Vorzugsweise werden die Copolymere der erfindungsgemäß verwendeten wässrigen Zubereitungen durch Emulsionspolymerisation in Gegenwart oberflächenaktiver Verbindungen hergestellt. Als oberflächenaktive Verbindungen kommen sowohl Schutzkolloide als auch Emulgatoren, vorzugsweise Emulgatoren, in Betracht. Die oberflächenaktiven Verbindungen bleiben naturgemäß in den Polymerdispersionen der Copolymere enthalten und können somit die anwendungstechnischen Eigenschaften der erfindungsgemäßen wässrigen Zubereitungen beeinflussen.

Für die Eigenschaften der wässrigen Zubereitungen hat es sich als vorteilhaft erwiesen, wenn diese wenigstens einen anionischen Emulgator der Formel I enthalten,

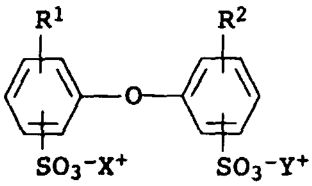

(I)

worin $R^1$ und $R^2$ unabhängig voneinander für Wasserstoff oder einen linearen oder verzweigten Alkylrest mit 4 bis 24 C-Atomen stehen und nicht gleichzeitig Wasserstoff sind, und $X^+$ und $Y^+$ gleich oder verschieden sind und für ein einwertiges Kation oder ein Kationenäquivalent stehen.

Vorzugsweise stehen $X^+$ und $Y^+$ in Formel I für Alkalimetallkationen und/oder Ammoniumionen und insbesondere für ein Natriumkation. $R^1$ und $R^2$ stehen vorzugsweise für lineare oder verzweigte Alkylreste mit 10 bis 18 C-Atomen oder für Wasserstoff. Die Verbindungen der Formel I sind allgemein bekannt, z. B. aus der EP-A-469 295. Besonders vorteilhaft sind Verbindungen der Formel I, in denen $X^+$ und $Y^+$ Natrium, $R^1$ ein verzweigter Alkylrest mit 10, 12, 14 oder 16 C-Atomen, insbesondere 12 C-Atomen, und $R^2$ Wasserstoff oder gleich $R^1$ ist. Häufig werden technische Gemische verwendet, die einen Anteil von 50 bis 90 Gew.-% des monoalkylierten Produktes aufweisen, beispielsweise DOWFAX® 2A1 (Warenzeichen der Dow Chemical Company).

Weitere geeignete anionische Emulgatoren sind dem Fachmann bekannt. Bevorzugte anionische Emulgatoren sind beispielsweise Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$), von Alkylsulfonsäuren (Alkylrest: $C_{12}$-$C_{18}$) und von Alkylarylsulfonsäuren (Alkylrest: $C_9$ bis $C_{18}$). Bevorzugte nichtionische Emulgatoren sind aliphatische nichtionische Emulgatoren, beispielsweise Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxilierungsgrad von 8 bis 50. Vorzugsweise enthalten die nichtionischen Emulgatoren keine Derivate von Alkylphenolen.

Neben den oder anstelle der anionischen Emulgatoren der allgemeinen Formel I können erfindungsgemäß ein oder mehrere weitere anionische Emulgatoren, nichtionische Emulgatoren und/oder Schutzkolloide als oberflächenaktive Verbindungen verwendet werden. Vorzugsweise ist eine Verbindung der allgemeinen Formel I alleiniger anionischer Emulgator. Vorteilhaft können bei der Herstellung der Copolymere auch Mischungen aus wenigstens einem anionischen und wenigstens einem nichtionischen Emulgator eingesetzt werden.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420.

Oberflächenaktive Verbindungen werden üblicherweise in Mengen von 0,1 bis 10 Gew.-%, vorzugsweise 0,5 bis 5 Gew.-%, bezogen auf die Gesamtmenge der zu polymerisierenden Monomere, verwendet. Vorzugsweise werden als oberflächenaktive Verbindungen ausschließlich Emulgatoren eingesetzt, deren relative Molekulargewichte im Unterschied zu den Schutzkolloiden üblicherweise unter 2000 liegen.

Auf diesem Wege sind wässrige Polymerdispersionen mit einem Polymergehalt bis zu 80 Gew.-%, bezogen auf das Gesamtgewicht der Dispersion, zugänglich. Für die Herstellung der erfindungsgemäßen Beschichtungsmassen werden aus praktischen Gründen vorzugsweise Dispersionen mit Polymergehalten im Bereich von 30 bis 70 Gew.-%, insbesondere 40 bis 60 Gew.-%, eingesetzt.

Vorzugsweise werden die wässrigen Dispersionen der Copolymere nach ihrer Herstellung und vor ihrem Einsatz in den erfindungsgemäßen Zubereitungen durch Zugabe einer Base, z. B. Ammoniak, schwerflüchtigen Aminen, Alkalimetall- oder Erdalkalimetallhydroxiden, Erdalkalimetalloxiden neutralisiert. Der pH-Wert der Dispersionen liegt nach der Neutralisation vorzugsweise im Bereich von pH 6 bis pH 9.

Die wässrigen Dispersionen des Copolymers können gewünschtenfalls mit weiteren Komponenten formuliert werden. Das Formulieren erfolgt in bekannter Weise durch Abmischen der Komponenten in hierfür üblichen Mischvorrichtungen. Weitere Komponenten sind beispielsweise Pigmente/Füllstoffe und übliche Hilfsmittel. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrigen Dispersionen der Copolymere mit der Pigmentpaste bzw. Pigmentdispersion zu vermischen.

Die erfindungsgemäß zu verwendenden wässrige Zubereitungen weisen vorzugsweise einen Gesamtgehalt an Copolymeren im Bereich von 10 bis 60 Gew.-%, besonders bevorzugt 30 bis 60 Gew.-% und insbesondere 40 bis 50 Gew.%, auf. Daneben enthalten die erfindungsgemäßen Zubereitungen häufig noch weitere nichtflüchtige Bestandteile, wie Pigmente, Füllstoffe, Emulgatoren, Weichmacher und polymere Hilfsmittel. Die Gesamtmenge an nichtflüchtigen Bestandteilen liegt in der Regel im Bereich von 20 bis 70 Gew.-%, vorzugsweise im Bereich von 30 bis 60 Gew.-% und besonders bevorzugt im Bereich von 40 bis 55 Gew.-%, bezogen auf das Gesamtgewicht der Polymerzubereitung.

Der Gehalt an Füllstoffen und Pigmenten in der Zubereitung, charakterisiert durch die Pigmentvolumenkonzentration PVK kann grundsätzlich je nach Anwendungszweck variieren. Die Pigmentvolumenkonzentration ist der mit 100 multiplizierte Quotient aus der Summe von Pigmentvolumen plus Füllstoffvolumen, geteilt durch das Gesamtvolumen von Pigment, Füllstoff plus filmbildende Bestandteile (Copolymere). Je nach Anwendungszweck und Polymertyp wird das Verhältnis von Copolymer und Pigment und damit die Pigmentvolumenkonzentration in bekannter Weise variieren. Üblicherweise liegt die Pigmentvolumenkonzentration der erfindungsgemäßen Polymerzubereitungen im Bereich von 0 bis 50. Jedoch begünstigt ein hoher Pigment/Füllstoffgehalt eine Enthaftung der auf Basis der erfindungsgemäß verwendeten Zubereitungen erstellten Beschichtungen, insbesondere wenn es sich bei den Substraten um flexible Gegenstände handelt, die einer hohen mechanischen Belastung, z. B. durch Biegen, unterworfen sind. Andererseits bringt der Einsatz unpigmentierter/ungefüllter wässriger Zubereitungen einen wirtschaftlichen Nachteil mit sich. Daher hat es sich als vorteilhaft erwiesen, die erfindungsgemäßen Zubereitungen entweder unpigmentiert/ungefüllt oder niedrig pigmentiert/gefüllt einzusetzen, insbesondere in den nachstehend angegebenen Mengenbereichen. Die Pigmentvolumenkonzentration liegt in den erfindungsgemäß verwendeten wässrigen Zubereitungen, vorzugsweise im Bereich von 0 bis 40, z. B. unpigmentiert/ungefüllt oder mit einer Pigmentvolumenkonzentration im Bereich von 1 bis 40, z. B. von etwa 4, etwa 10, etwa 15 oder etwa 27.

Die erfindungsgemäßen Polymerzubereitungen enthalten somit typischerweise, bezogen auf das Gesamtgewicht der in ihnen enthaltenen Feststoffe:

i) 20 bis 60 Gew.-% feste filmbildende Bestandteile ( = Copolymer)

ii) 0 bis 30 Gew.-%, vorzugsweise 0 bis 20 Gew.-%, z. B. 2 bis 20 Gew.-%, wenigstens eines Pigments und gegebenenfalls

iii) 0 bis 70 Gew.-% Füllstoffe, vorzugsweise 0 bis 60 Gew.-%, z. B. 10 bis 60 Gew.-%, sowie

iv) 0,1 bis 20 Gew.-%, vorzugsweise 0,5 bis 10 Gew.-% übliche Hilfsmittel.

Typische Pigmente für die erfindungsgemäßen Beschichtungsmittel sind anorganische Pigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat). Die Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Zubereitungen auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat,

Dolomit, Erdalkalisulfate, wie Calciumsulfat, Siliziumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze. Die Dispergiermittel werden in der Regel in einer Menge von 0,1 bis 0,6 Gew.-%, bezogen auf das Gesamtgewicht der wässrigen Zubereitung, eingesetzt.

Ferner zählen zu den Hilfsmitteln gegebenenfalls auch Verdickungsmittel, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sogenannte Assoziativverdicker, beispielsweise Styrol-Maleinsäureanhydrid-Polymerisate, Styrol-Acrylsäure-Butylacrylat-Terpolymere oder hydrophob modifizierte Polyetherurethane, wie sie beispielsweise von N. Chen et al. in J. Coatings Techn. Vol. 69, No. 867, 1997, S. 73 und von R. D. Hester et al. J. Coatings Technology, Vol. 69, No. 864, 1997, S. 109 beschrieben sind und auf deren Offenbarung hiermit in vollem Umfang Bezug genommen wird.

Auch anorganische Verdickungsmittel, z. B. Bentonite oder Hektorit, können verwendet werden. Verdikkungsmittel werden im Allgemeinen in Mengen von 0,1 bis 3 Gew.-%, vorzugsweise 0,1 bis 1 Gew.-%, bezogen auf das Gesamtgewicht der wässrigen Zubereitung, verwendet.

Ferner zählen zu den Hilfsmitteln in der Regel auch Entschäumer, Konservierungs- oder Hydrophobiermittel, Biozide oder weitere Bestandteile.

Erfindungsgemäß verwendet man die vorstehend beschriebenen wässrigen Polymerzubereitungen als Erstauftrag bei Nass-in-Nass-Beschichtungssystemen.

Hieran kann sich gewünschtenfalls ein Zwischenschritt anschließen, bei dem man ein festes, nicht filmbildendes, teilchenförmiges Gut, z. B. ein Sand oder Granulat, auf die noch feuchte Erstbeschichtung aufbringt.

Auf die erste Zubereitung wird anschließend nass-in-nass wenigstens eine weitere Polymerzubereitung, vorzugsweise eine wässrige Polymerzubereitung, deren filmbildendes Polymer in Form einer Polymerdispersion vorliegt, aufgetragen.

Die erste und die zweite Zubereitung können identisch sein oder, wenn sie das gleiche Copolymer enthalten, sich z. B. im Feststoffgehalt, in der Pigmentvolumenkonzentration (PVK) und/oder den sonstigen Zusätzen, z. B. Hilfsmitteln, unterscheiden. Vorzugsweise wird als zweite Zubereitung eine Zubereitung eingesetzt, die sich in ihrem filmbildenden Bestandteil von der ersten Zubereitung unterscheidet.

Wenn als zweite Zubereitung eine nicht wässrige Zubereitung aufgetragen wird, sollte diese mit der wässrigen ersten Zubereitung verträglich sein. Geeignete mit wässrigen Zubereitungen verträgliche nicht wässrige Zubereitungen sind dem Fachmann bekannt. Geeignet sind beispielsweise zweite Zubereitungen auf Basis von Polyesterharzen, Polyurethanharzen, strahlungshärtbaren Präpolymeren, z. B. Urethanacrylaten, Polyetheracrylaten, Polyesteracrylaten, Epoxidacrylaten oder Melaminacrylaten.

Als zweite Zubereitung kann auch geschmolzenes Polymethylmethacrylat auf die Erstbeschichtung aufgebracht werden.

Wenn als zweite Zubereitung eine wässrige Zubereitung zum Einsatz kommt, handelt es sich auch bei dieser vorzugsweise um eine Polymerzubereitung, die ein filmbildendes Polymer in Form einer wässrigen Polymerdispersion enthält. Derartige Polymerzubereitungen sind dem Fachmann als Beschichtungsmittel auf Wasserbasis bekannt. Neben dem filmbildenden Polymer enthalten derartige Polymerzubereitungen die für Beschichtungsmittel üblichen Hilfsstoffe sowie gegebenenfalls Pigmente und Füllstoffe. In der Regel unterscheidet sich das Polymer der zweiten Zubereitung von dem Polymer der ersten Zubereitung durch die Mengenverhältnisse der einpolymerisierten Monomere und/oder durch die Auswahl der einpolymerisierten Monomere und/oder die Glasübergangstemperatur $T_g$ des Polymers.

Bevorzugt werden als zweite Zubereitungen wässrige Polymerzubereitungen auf Basis wässriger Copolymerdispersionen eingesetzt, die nach dem Trocknen eine geringe Neigung zum Weißanlaufen zeigen. Unter Weißanlaufen versteht man den Effekt, sich bei Bewitterung, insbesondere bei Feuchtbewitterung, Farbton und/oder Farbintensität der beschichteten Oberfläche verändern. In vielen Fällen äußert sich das Weißanlaufen dadurch, dass die beschichtete Oberfläche in Gegenwart von Feuchtigkeit milchig-trüb wird und/oder sich die sonstigen Brechungseigenschaften ändern.

Weiterhin müssen die Zweitbeschichtungen witterungsstabil sein, d. h. sie dürfen bei Bewitterung, insbesondere bei Einwirkung von UV-Strahlung, nicht zu Verfärbungen oder zur Rissbildung neigen.

Geeignete wässrige Zubereitungen, die als zweite Zubereitung eingesetzt werden können, deren Beschichtungen witterungsstabil sind und eine geringe Neigung zum Weißanlaufen zeigen, sind dem Fachmann bekannt. In der Regel handelt es sich dabei ebenfalls um wässrige Polymerzubereitungen auf Basis wässriger Copolymerdispersionen. Diese weisen einen hohen Anteil an hydrophoben Monomeren und einen geringen Anteil an hydrophilen Monomeren bzw. sogenannten Hilfsmonomeren auf. Der Anteil an Hilfsmonomeren liegt vorzugsweise unter 10 Gew.-%, bevorzugt unter 5 Gew.-% und besonders bevorzugt unter 3,5 Gew.-%, bezogen auf das Gesamtgewicht aller einpolymerisierten Monomere. Typische Hilfsmonomere sind Hydroxyalkylester ethylenisch ungesättigter Mono- und Dicarbonsäuren, N-Vinyllactame, z. B. N-Vinylpyrrolidon, die vorstehend genannten ethylenisch ungesättigten Mono- und Dicarbonsäuren, die Halbester der vorstehend genannten ethylenisch ungesättigten Dicarbonsäuren, die Amide der vorstehend genannten ethylenisch ungesättigten Carbonsäuren. Bevorzugte Hilfsmonomere sind Acrylsäure, Methacrylsäure, Vinylessigsäure, Acrylamidoglycolsäure, Methacrylamidoglycolsäure, Acrylamid und Methacrylamid.

Geeignete wässrige Polymerzubereitungen, die zu witterungsstabilen Beschichtungen mit geringer Neigung zum Weißanlaufen führen, sind z. B. in der EP-A-915 071 und der DE 198 10 050 beschrieben, auf die hiermit ausdrücklich Bezug genommen wird.

Besonders geeignete zweite Zubereitungen sind beispielsweise solche, deren Polymere als monoethylenisch ungesättigte Monomere 20 bis 60 Gew.-%, bevorzugt 25 bis 55 Gew.-% und besonders bevorzugt 30 bis 50 Gew.-% wenigstens eines vinylaromatischen Monomers oder eines $C_1$-$C_4$-Alkylmethacrylats, vorzugsweise Styrol und/oder Methylmethacrylat, und 40 bis 80 Gew.-%, bevorzugt 45 bis 75 Gew.-% und besonders bevorzugt 50 bis 70 Gew.-% wenigstens eines Acrylesters von linearen und verzweigten $C_1$-$C_{10}$-Alkanolen, vorzugsweise Ethylacrylat, n-Butylacrylat und/oder 2-Ethylhexylacrylat und als Hilfsmonomere 0 bis 5 Gew.-%, bevorzugt 0,5 bis 2,5 Gew.-%, copolymerisierbare Carbonsäuren, ausgewählt unter Acrylsäure, Methacrylsäure und Itaconsäure, bevorzugt Acrylsäure, einpolymerisiert enthalten.

Bei niedrig pigmentierten Zubereitungen, insbesondere bei Klarlacken, sind die vorstehend beschriebenen Copolymere besonders geeignet, bei denen die vinylaromatischen Monomere ganz oder teilweise, insbesondere ganz, durch Methylmethacrylat ersetzt sind. Durch den erhöhten Anteil an Methylmethacrylat wird bei niedrig- oder nicht-pigmentierten Zubereitungen die Witterungsstabilität der Beschichtung verbessert. Bei höher pigmentierten Zubereitungen, z. B. bei einer Pigmentvolumenkonzentration $\geq 20$, sind Styrol-haltige Beschichtungen den Methylmethacrylat-haltigen Beschichtungen zumindest gleichwertig und werden aus Kostengründen häufig bevorzugt.

Ebenfalls besonders geeignet als zweite Polymerzubereitung sind wässrige Zubereitungen auf Basis von Copolymeren, die 70 bis 99,9 Gew.-%, insbesondere 80 bis 99,5 Gew.-% wenigstens eines Methacrylsäureesters von $C_1$-$C_{10}$-Alkanolen, bevorzugt n-Butylmethacrylat, als Hauptmonomer einpolymerisiert enthalten. Derartige Zubereitungen werden in der DE 198 10 050 beschrieben, auf die hiermit in vollem Umfang Bezug genommen wird.

Die erfindungsgemäßen Nass-in-Nass-Beschichtungen können zur Beschichtung verschiedenster Materialien verwendet werden. Geeignet sind beispielsweise Materialien, wie Holz, Beton, Metalle, wie Eisen, Stahl, Buntmetall, z. B. Kupfer, Messing und Bronze, und Aluminium, insbesondere in Form von Bahnen, Blechen, Profilen, Rohren und Drähten, Glas, Keramiken, Papiere, Pappen und bituminöse Materialien, wie Bitumenplatten, Bitumenwellplatten und Bitumenpappen. Metallische Materialien können gegebenenfalls verzinkt und/oder lackiert sein. Ebenfalls geeignet als zu beschichtende Materialien sind mineralische Gegenstände, beispielsweise Betondachsteine oder Faserzementplatten.

Die vorteilhaften Eigenschaften der erfindungsgemäß zu verwendenden Zubereitungen kommen insbesondere bei flexiblen und/oder nach dem Beschichten formbaren Materialien zum Tragen. Vorzugsweise handelt bei den flexiblen Materialien um metallische Gegenstände, insbesondere die oben genannten metallischen Gegenstände. Ganz besonders eignen sich die erfindungsgemäßen wässrigen Zubereitungen für Beschichtungen von Materialien, die nach dem Beschichten temporär oder bleibend verformt werden. Beispiele für temporäres Verformen sind z. B. das Verpacken nach der Herstellung, wie Aufwickeln oder Aufrollen. Typische Materialien, die so mechanisch belastet werden, sind beschichtete Papiere und Pappen, beispielsweise die vorstehend beschriebenen Pappen, sowie metallische Materialien, z. B. Bleche oder Bahnen, insbesondere mittels des Coil-Coating-Verfahrens beschichtete oder beschichtbare metallische Gegenstände. Beispiele für Materialien, die nach der Herstellung bleibend verformt werden, sind Bauelemente aus Metall, z. B. Metalldachelemente. Zum Teil werden Bauelemente aus Metall vor dem Beschichten ihrer Oberflächen einem oder mehreren formgebenden Schritt(en) unterworfen, z. B. durch Prägen, Pressen, Biegen oder ähnliches. Alternativ werden solche Metallelemente in Form von Platten, Blechen oder Endlosbahnen beschichtet, die Beschichtung gegebenenfalls getrocknet oder eingebrannt und die beschichteten Gegenstände anschließend durch Prägen, Pressen oder Biegen ihrem Verwendungszweck entsprechend geformt. In beiden Fällen erfolgen bei der Anwendung am Bau vielfach weitere Verformungen, z. B. um die Metallelemente an die örtlichen Gegebenheiten anzupassen.

Besonders bevorzugt ist daher die Verwendung zum Nass-in-Nass-Beschichten von bereits nach dem konventionellen Coil-Coating-Verfahren beschichteten metallischen Gegenständen und die Verwendung zur Nass-in-Nass-Beschichtung von nicht beschichteten metallischen Gegenständen, z. B. anstatt der konventionellen Einbrennlackierungen.

Weiterer Gegenstand des vorliegenden Verfahrens ist daher ein Verfahren zum Beschichten von Gegenständen, wobei man als Erstauftrag eine erste wässrige Polymerzubereitung eines Siliziumgruppen enthaltenden Polymeren, wie vorstehend beschrieben, vorzugsweise in einer Menge von 50 bis 500 g/m$^2$, insbesondere 100 bis 400 g/m$^2$, auf den beschichteten Oberflächen eines Gegenstands aufbringt, vor dem Verfestigen des Erstauftrags wenigstens eine weitere Polymerzubereitung, vorzugsweise in einer Menge von 50 bis 500 g/m$^2$, auf den noch feuchten Erstauftrag aufbringt und die Polymerzubereitungen anschließend auf dem Gegenstand verfestigt.

Bei dem erfindungsgemäßen Verfahren kann man, wie bereits erwähnt, auf die noch feuchte erste Beschichtung eine rieselfähige, nicht filmbildende Substanz (teilchenförmiges Gut) aufbringen.

Das Aufbringen der ersten Polymerzubereitung erfolgt in der Regel durch Spritzen, Rakeln, Gießen, Streichen oder Walzen. Das Aufbringen der zweiten Polymerzubereitung erfolgt in gleicher Weise. Das Aufbringen der ersten und der zweiten Zubereitung kann direkt nacheinander erfolgen. In vielen Fällen ist es vorteilhaft, die zweite Zubereitung nicht direkt nach der ersten Zubereitung aufzubringen. Zum Beispiel kann nach dem Aufbringen der ersten Zubereitung ein weiterer Verfahrensschritt erfolgen, z. B. ein Tempern, ein teilweises Trocknen oder ein Aufbringen einer weiteren Komponente, z. B. eines teilchenförmigen Guts. Die zweite Zubereitung wird jedoch vorteilhaft aufgebracht, bevor die erste Zubereitung ihre Endfestigkeit erreicht hat, d. h. solange diese einen Wassergehalt von wenigstens 5 Gew.-%, bevorzugt wenigstens 10 Gew.-% und besonders bevorzugt wenigstens 15 Gew.-%, z. B. einen Wassergehalt im Bereich von 10 bis 60 Gew.-% oder 15 bis 50 Gew.-%, aufweist. Eine Art Tempern oder teilweises Trocknen kann z. B. dadurch erreicht werden, dass die erste Zubereitung auf einen vorgewärmten Gegenstand aufgebracht wird. Geeignete Vorwärmtemperaturen oder zum Tempern geeignete Temperaturen liegen im Bereich von 30 bis 100, vorzugsweise 35 bis 70 °C und besonders bevorzugt 40 bis 60 °C.

In einer bevorzugten Ausführungsform wird nach dem Aufbringen des Erstauftrags und vor dem Aufbringen des zweiten Auftrags teilchenförmiges Gut auf den noch nicht verfestigten Erstauftrag aufgebracht. Unter teilchenförmigen Gut sind im Rahmen dieser Erfindung feinteilige, riesel- bzw. streufähige und im Wesentlichen wasserunlösliche, nicht filmbildende Teilchen zu verstehen. Beispiele für geeignete teilchenförmige Güter sind z. B. mineralische Teilchen, wie Sand, Kies, mineralischen Granulate, insbesondere Splitt, Tonteilchen, Kreiden oder Bimsstein, organische Teilchen, wie Holzteilchen und Kork- oder Kunststoffgranulat, sowie metallische Teilchen, z. B. Metallspäne. Dabei sind mineralische und organische Teilchen bevorzugt. Insbesondere sind solche Güter bevorzugt, deren Teilchen eine mittlere Teilchengröße im Bereich von 10 µm bis 5 mm, z. B. 100 µm bis 3 mm aufweisen. Das Aufbringen des teilchenförmigen Guts erfolgt vorzugsweise als Suspension oder Feststoff, bevorzugt als Feststoff. Geeignete Verfahren zum Aufbringen eines solchen teilchenförmigen Guts sind dem Fachmann bekannt. Das Aufbringen erfolgt vorzugsweise durch Aufstreuen oder Aufrieseln oder durch Eintauchen des mit der ersten Zubereitung versehenen Gegenstands in das teilchenförmige Gut. Überschüssiges Gut wird anschließend beispielsweise durch Abklopfen, Rütteln oder durch Abblasen entfernt, bevor die zweite Beschichtung aufgebracht wird.

Vorzugsweise wird die Nass-in-Nass-Beschichtung eines Gegenstands so durchgeführt, dass man ein gegebenenfalls vorgewärmter Gegenstand unter Verwendung einer erfindungsgemäßen ersten Zubereitung ein- oder mehrmals, vorzugsweise ein- oder zweimal beschichtet, gegebenenfalls wenigstens eine weitere Komponente, insbesondere ein teilchenförmiges Gut, aufbringt und anschließend wenigstens eine zweite Zubereitung aufbringt und gegebenenfalls anschließend trocknet. Vor dem Aufbringen der weiteren Komponente und/oder der zweiten Zubereitung(en) können unabhängig voneinander Temper- und/oder Trocknungsschritte eingelegt werden. Häufig wird man die erste Beschichtung bei Umgebungstemperatur für einen begrenzten Zeitraum antrocknen, z. B. 5 bis 60 Minuten, bevor man die zweite Beschichtung aufbringt. Innerhalb dieses Zeitraums kann man auch das teilchenförmige Gut aufbringen.

An das Aufbringen der zweiten Zubereitung(en) können sich ein oder mehrere Trocknungsschritte anschließen. Diese abschließende Trocknung wird vorzugsweise bei Temperaturen im Bereich von 20 bis 200 °C, bevorzugt 30 bis 100 °C durchgeführt. Die Zeitdauer für die abschließende Trocknung liegt in der Regel unter 300 Minuten, insbesondere im Bereich von 10 bis 180 Minuten. Die erfindungsgemäß verwendeten ersten Zubereitungen werden in der Regel in einer Menge von 50 bis 500 g/m$^2$, vorzugsweise 100 bis 350 g/m$^2$, z. B. etwa 200 g/m$^2$, 250 g/m$^2$ oder 300 g/m$^2$, aufgebracht.

Weitere Komponenten, insbesondere teilchenförmige Güter, werden in der Regel in einer Menge von 5 bis 750 g/m$^2$, insbesondere 10 bis 500 g/m$^2$ aufgebracht. Mineralische Teilchen werden vorzugsweise in einer Menge von 10 bis 250 g/m$^2$ aufgebracht. Organische Teilchen werden in der Regel in einer Menge von 10 bis 250 g/m$^2$ aufgebracht. Das Aufbringen der zweiten Zubereitung(en) erfolgt in der Regel in einer Menge von 20 bis 500 g/m$^2$, insbesondere 50 bis 250 g/m$^2$, z. B. etwa 100 g/m$^2$ oder etwa 200 g/m$^2$.

Weiterer Gegenstand der vorliegenden Erfindung ist ein beschichteter Gegenstand, erhältlich durch ein wie vorstehend beschriebenes Verfahren.

Beispiele

I. Herstellung der erfindungsgemäß zu verwendenden wässrigen Zubereitungen ED1 und ED2 sowie der Vergleichszubereitungen VD1 bis VD3 als Polymerisatdispersionen (erste Zubereitungen)

Eine wässrige Emulsion des jeweiligen Monomerengemischs und 0,5 g Natriumlaurylsulfat in 105 g Wasser wurde mit 0,5 g Natriumperoxodisulfat als Initiator nach der Emulsionszulauffahrweise bei 90 °C nach der Methode der radikalischen wässrigen Emulsionspolymerisation polymerisiert. Die Dispersionen wiesen nach Desodorierung und pH-Wert Einstellung einen pH-Wert von etwa 8 und einen Feststoffgehalt von etwa 49 % auf. Zusammensetzung und physikalische Daten der erhaltenen Dispersionen D1 bis D6 sind in Tabelle 1 dargestellt.

Tabelle 1

| | Einpolymerisierte Monomere | | | | | |
|---|---|---|---|---|---|---|
| Dispersion | Styrol [g] | BA[1)] [g] | Acrylsäure [g] | γ-Methacryloxypropyltrimethoxysilan [g] | $T_g$[2)] [°C] | Feststoffgehalt |
| ED1 | 54 | 44 | 2 | 0,5 | +35 | 49% |
| ED2 | 49 | 49 | 2 | 0,5 | +25 | 49% |
| VD3 | 49 | 49 | 2 | - | +23 | 49% |
| VD4 | 54 | 44 | 2 | - | +32 | 49% |
| VD5 | 29 | 69 | 2 | - | -15 | 49% |

1) BA = n-Butylacrylat

2) bestimmt aus dem E-Modul gemäß Zosel, siehe S. 9

Zusätzlich wurde aus jeweils 50 Gewichtsteilen der Dispersionen D3 und D5 ein Polymerblend angefertigt (siehe Vergleichsbeispiel VB3 in Tabelle 2).

II. Herstellung der wässrigen zweiten Zubereitungen D6 und D7

a) Herstellungsvorschrift für D6

Die Herstellung erfolgte gemäß Vergleichsbeispiel VD7 der DE 198 1050:

In einem Polymerisationsgefäß legte man 627,6 g entionisiertes Wasser, 69,4 g Emulgatorlösung 3 vor und erwärmte auf 82 °C.

In einem Zulaufgefäß 1 stellte man eine Emulsion aus

| | |
|---|---|
| 605,4 g | entionisiertes Wasser |
| 17,3 g | Emulgatorlösung |
| 1211,7 g | n-Butylmethacrylat |
| 18,2 g | Methacrylsäure |
| 18,3 g | Butandioldiacrylat |
| 60,8 g | 20 gew.-%ige Lösung von Diacetonacrylamid in Wasser |
| 121,2 g | 20 gew.-%ige Lösung von Acrylamid in Wasser |

her.

In einem zweiten Zulaufgefäß 2 stellte man eine Lösung von 1,7 g Natriumperoxodisulfat in 68,9 g Wasser her.

Dann gab man unter Beibehaltung der 85 °C nacheinander in einer Portion 100 g von Zulauf 1 und 16,3 g von Zulauf 2 in die Vorlage. Anschließend gab man, über räumlich getrennte Zuläufe zeitgleich beginnend, die Restmengen von Zulauf 1 innerhalb 2,5 h und von Zulauf 2 innerhalb 2,6 h unter Beibehaltung der 85 °C in das Polymerisationsgefäß. Nach Beendigung von Zulauf 2 ließ man 1 h nachpolymerisieren, kühlte auf 60 °C ab, neutralisierte mit Ammoniak (pH ≈ 7,5) und setzte 148 g einer 12 gew.-%igen Lösung von Adipinsäuredihydrazid in Wasser zu, rührte weitere 30 min bei 60 °C und kühlte dann auf Raumtemperatur.

Der Feststoffgehalt der erhaltenen Dispersionen lag bei etwa 45 Gew.-%.

Emulgatorlösung: 28 gew.-%ige Lösung des Natriumsalzes eines Fettalkoholethersulfats in Wasser ($C_{12}$-

$C_{14}$-Alkyl, 2,5 Ethylenoxideinheiten).

b) Herstellungsvorschrift für D7

Analog der für ED1 angegebenen Herstellungsvorschrift stellte man ein Polymer aus 53,5 g Methylmethacrylat, 45 g Ethylhexylacrylat, 1 g Methacrylsäure und 0,5 g Methacrylamid in Gegenwart von 0,5 g DOWFAX® 2A1 (berechnet als Feststoff) her.

Anschließend wurde der pH-Wert mit Natronlauge auf pH 8 eingestellt.

Der Feststoffgehalt der erhaltenen Dispersion lag bei etwa 50 Gew.-%. Die Glasübergangstemperatur $T_g$ des erhaltenen Copolymerisates beträgt 28 °C, bestimmt mittels DSC nach DIN 53765.

III. Herstellung erster und zweiter Zubereitungen

Alle Dispersionen wurden auf Feststoffgehalte von 50 Gew.-% eingestellt.

1. Erste Zubereitung

Die nach I. hergestellten Polymerdispersionen ED1, ED2 und VD1 bis VD3 wurden zu Farben mit einem PVK 27 formuliert. Hierzu konfektionierte man je 1000 g Dispersion mit 5 g eines handelsüblichen Entschäumers (Tego Foamex® 825 der Th. Goldschmidt AG) und 50 g eines technischem Gemischs aus Di-n-butylestern der Bernstein-, Glutar- und Adipinsäure.

Dann suspendierte man in Gegenwart geringer Mengen von Netzmitteln, Entschäumern, Viskositätsmodifizierern und einem Biozid 253 g eines handelsüblichen Füllstoffgemischs (Calciumcarbonylat/Calciumsilikat) sowie 38,8 g schwarzes Eisenoxid-Pigment in 112 g Wasser und gab hierzu 598 g der konfektionierten Dispersion. Die Pigmentvolumenkonzentration der Farbe betrugt etwa 27.

2. Zweite Zubereitung

Zunächst wurden je 1000 g der Dispersionen D6 und D7 wie unter 1. beschrieben konfektioniert. Dann suspendierte man 38 g schwarzes Eisenoxid-Pigment in etwa 30 g Wasser und gab hierzu 600 g konfektionierte Polymerdispersion. Man erhielt eine Farbe mit einer Pigmentvolumenkonzentration von etwa 4.

III. Prüfung der anwendungstechnischen Eigenschaften

Zur Prüfung der anwendungstechnischen Eigenschaften wurden als Gegenstände verzinkte Coil-coated-Bleche eingesetzt. Die Bleche wurden auf 40 °C vorgewärmt und jeweils eine der vorstehend beschriebenen Zubereitung in einer Auftragsmenge von 250 g/m² aufgebracht. Das Aufbringen erfolgte mittels Spritzen. Innerhalb von weniger als 5 Minuten wurden auf die noch nasse erste Zubereitung Steinchen einer mittleren Korngröße von 2 mm aufgestreut, der überschüssige Rest durch Abblasen mit Druckluft entfernt, und innerhalb von weiteren 5 Minuten eine zweite Zubereitung durch Spritzen in einer Menge von 100 g/m² aufgebracht. Der so erhaltene nass-in-nass beschichtete Gegenstand wurde anschließend für ca. 45 Minuten bei 60 bis 65 °C getrocknet.

Zur Bestimmung des Enthaftungsneigung wurden die beschichteten und getrockneten Bleche entlang einer Kante um ca. 90 ° gebogen. Die Beurteilung der durch die mechanische Belastung entstandenen Enthaftung wurde visuell durchgeführt. Der Beurteilung wurde folgende Notenskala zugrundegelegt:

0 = nicht vorhanden
1 = schwach erkennbar
2 = gut erkennbar
3 = auffallend
4 = stark auffallend
5 = sehr stark auffallend

Tabelle 2

| Ergebnisse der anwendungstechnischen Prüfung | | | | | |
|---|---|---|---|---|---|
| | erste Zubereitung | PVK | zweite Zubereitung | PVK | Enthaftung |
| VB1 | VD3 | 27 | D6 | 4 | 3 |
| VB2 | VD4 | 27 | D6 | 4 | 4 |
| VB3 | VD3/VD5 | 27 | D6 | 4 | 2 |

Tabelle 2 (fortgesetzt)

| Ergebnisse der anwendungstechnischen Prüfung | | | | | |
|---|---|---|---|---|---|
| | erste Zubereitung | PVK | zweite Zubereitung | PVK | Enthaftung |
| B1 | ED1 | 27 | D6 | 4 | 1 |
| B2 | ED2 | 27 | D6 | 4 | 1 |
| B3 | ED1 | 27 | D7 | 4 | 1 |
| B4 | ED2 | 27 | D7 | 4 | 1 |

Die Beispiele zeigen deutlich, dass die erfindungsgemäße Verwendung erster Zubereitungen, die siliziumorganische Verbindungen einpolymerisiert enthalten, für Nass-in-Nass-Beschichtungen, insbesondere als Erstauftrag in Nass-in-Nass-Beschichtungen, zu Beschichtungen mit deutlich verbesserten Haftungseigenschaften bzw. einer deutlich geringeren Enthaftungsneigung bei mechanischer Beanspruchung der Gegenstände, insbesondere metallischer Gegenstände, führen.

**Patentansprüche**

**1.** Verwendung wässriger Polymerzubereitungen, enthaltend wenigstens ein filmbildendes Copolymer in Form einer wässrigen Polymerdispersion, worin das Copolymer, bezogen auf sein Gesamtgewicht, 0,1 bis 5 Gew.-% einer siliziumorganischen Verbindung chemisch gebunden enthält, als Erstauftrag bei der Herstellung von Nass-in-Nass-Beschichtungen.

**2.** Verwendung nach Anspruch 1, wobei das filmbildende Copolymer

a) 85 bis 99,8 Gew.-% wenigstens eines ethylenisch ungesättigten Monomers, ausgewählt unter Monovinylaromaten, Estern $\alpha,\beta$-ethylenisch ungesättigter $C_3$-$C_6$-Monocarbonsäuren mit $C_1$-$C_{12}$-Alkanolen und Vinylestern aliphatischer $C_1$-$C_{18}$-Carbonsäuren,

b) 0,1 bis 10 Gew.-% wenigstens eines ethylenisch ungesättigten Monomers, ausgewählt unter $\alpha,\beta$-ethylenisch ungesättigten $C_3$-$C_6$-Mono- und $C_4$-$C_8$-Dicarbonsäuren, deren Salzen und Amiden, und ethylenisch ungesättigten Monomeren, die eine Sulfonsäuregruppe enthalten, und

c) 0,1 bis 5 Gew.-% wenigstens einer ethylenisch ungesättigten siliziumorganischen Verbindung

einpolymerisiert enthält.

**3.** Verwendung nach Anspruch 2, wobei die Monomere a) wenigstens ein Monomer a1, ausgewählt unter Styrol und Methylmethacrylat und wenigstens ein Monomer a2, ausgewählt unter n-Butylacrylat und 2-Ethylhexylacrylat umfassen.

**4.** Verwendung nach einem der vorhergehenden Ansprüche, wobei die Glasübergangstemperatur des Copolymers im Bereich von +10 bis +40 °C liegt.

**5.** Verwendung nach einem der vorhergehenden Ansprüche, wobei die siliziumorganischen Verbindungen ausgewählt sind unter Vinyl-, (Meth)allyl- und (Meth)acryloxyalkylsilanen, die wenigstens eine SiOH, SiO-Alkyl- und/oder SiO-Acyl-Gruppe aufweisen.

**6.** Verwendung nach einem der vorhergehenden Ansprüche, wobei das zu beschichtende Material ein flexibles und/oder nach dem Beschichten formbares Material ist.

**7.** Verwendung nach Anspruch 6, wobei das flexible Material ein metallischer Gegenstand ist.

**8.** Verwendung nach einem der Ansprüche 1 bis 6, wobei das zu beschichtende Material ein mineralischer Gegenstand ist.

**9.** Verfahren zum Beschichten von Gegenständen, wobei man als Erstauftrag eine wässrige Polymerzubereitung

gemäß einem der Ansprüche 1 bis 4 auf einen Gegenstand aufbringt, vor dem Verfestigen des Erstauftrags wenigstens eine weitere Polymerzubereitung aufbringt und die Polymerzubereitungen anschließend auf dem Gegenstand verfestigt.

**10.** Verfahren nach Anspruch 9, wobei man die erste Zubereitung in einer Menge von 50 bis 500 $g/m^2$ auf den zu beschichtenden Gegenstand aufbringt.

**11.** Verfahren nach Anspruch 9 oder 10, wobei die weitere Polymerzubereitung ein filmbildendes Polymer in Form einer wässrigen Polymerdispersion enthält.

**12.** Verfahren nach einem der Ansprüche 9 bis 11, wobei die weitere Polymerdispersion in einer Menge von 20 bis 500 $g/m^2$ auf den zu beschichtenden Gegenstand aufbringt.

**13.** Verfahren nach Anspruch 9, wobei man vor dem Aufbringen der weiteren Zubereitung ein teilchenförmiges Gut aufbringt.

**14.** Beschichteter Gegenstand, erhältlich durch ein Verfahren gemäß einem der Ansprüche 9 bis 13.

Europäisches Patentamt

# EUROPÄISCHER RECHERCHENBERICHT

Nummer der Anmeldung
EP 00122919.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 7) |
|---|---|---|---|
| A | WO 91/09686 A (BASF LACKE + FARBEN AG) 11 Juli 1991, Ansprüche. -- | 1 | C09D201/00<br>B05D1/36 |
| A | US 4395463 A (KRAY) 26 Juli 1983, Ansprüche. -- | 1 | |
| A | US 4499150 A (DOWBENKO et al.) 12 Februar 1985, Ansprüche, Spalte 7, Zeilen 9-13. ---- | 1 | |

RECHERCHIERTE SACHGEBIETE (Int. Cl. 7)

C09D
B05D

Der vorliegende Recherchenbericht wurde für alle Patentansprüche erstellt.

| Recherchenort | Abschlussdatum der Recherche | Prüfer |
|---|---|---|
| WIEN | 13-12-2000 | PAMMINGER |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPA Form 1503 03 82

ANHANG ZUM EUROPÄISCHEN RECHERCHENBERICHT
ÜBER DIE EUROPÄISCHE PATENTANMELDUNG NR: EP 00122919.4

In diesem Anhang sind die Mitglieder der Patentfamilien der im obengenannten europäischen Recherchenbericht angeführten Patentdokumente angegeben. Die Angaben über die Familienmitglieder entsprechen dem Stand der EPIDOS-INPADOC-Datei am 08.01.01. Diese Angaben dienen zur Unterrichtung und erfolgen ohne Gewähr.

| Im Recherchenbericht angeführte Patenddokumente | Datum der Veröffentlichung | Mitglied(er) der Patentfamilie | Datum der Veröffentlichung |
|---|---|---|---|
| WO A 9109686a | | none | |
| US A 4395463 | 26-07-1983 | BE A1 889055 | 02-12-1981 |
| | | DE A1 3121385 | 05-08-1982 |
| | | ES A1 502632 | 01-12-1982 |
| | | ES A5 502632 | 28-12-1982 |
| | | ES A1 8301149 | 16-02-1983 |
| | | FR A1 2483325 | 04-12-1981 |
| | | FR B1 2483325 | 11-01-1985 |
| | | GB A1 2076695 | 09-12-1981 |
| | | GB A0 8333286 | 18-01-1984 |
| | | GB A1 2139115 | 07-11-1984 |
| | | GB B2 2076695 | 19-12-1984 |
| | | GB B2 2139115 | 22-05-1985 |
| | | IT A0 8122067 | 01-06-1981 |
| | | IT A 1137174 | 03-09-1986 |
| | | JP A2 57023661 | 06-02-1982 |
| | | JP B4 4004352 | 28-01-1992 |
| | | NL A 8102664 | 04-01-1982 |
| US A 4499150 | 12-02-1985 | US A 4499151 | 12-02-1985 |
| | | CA A1 1256335 | 27-06-1989 |

Bezüglich näherer Einzelheiten zu diesem Anhang siehe Amtsblatt des Europäischen Patentamtes, Nr. 12/82.